# EUROPÄISCHE PATENTSCHRIFT

(11) **EP 2 677 224 B1**
(45) Veröffentlichungstag und Bekanntmachung des Hinweises auf die Patenterteilung: **25.05.2016**
(21) Anmeldenummer: 12172685.5
(22) Anmeldetag: 20.06.2012
(51) Int. Cl.: F16L 33/22, F16L 37/138

(54) **Klemmverbindung für Rohre**
Clamp connection for pipes
Liaison de serrage pour tuyaux

(43) Veröffentlichungstag der Anmeldung: 25.12.2013
(73) Patentinhaber: Georg Fischer JRG AG, 4450 Sissach (CH)
(72) Erfinder: Bürli, Stephan, 4402 Frenkendorf (CH); Knörnschild, Thomas, 4153 Reinach (CH); Camelin, Enrico, 4460 Gelterkinden (CH)
(74) Vertreter: Fenner, Seraina

(56) Entgegenhaltungen:
- EP-A1- 1 835 220
- EP-A2- 1 598 903
- US-A1- 2002 000 721
- US-B1- 6 641 177

## Beschreibung

Die Erfindung betrifft eine Klemmverbindung für Rohre aus polymerem Werkstoff oder aus Verbundwerkstoffen beinhaltend ein Anschlussstück, welches eine Stützhülse für das Aufschieben eines anzuschliessenden Rohres aufweist und die an einem Ende mit einem Anschlagbund begrenzt ist, wobei an der Stützhülse ein Dichtelement angeordnet ist, wobei die Klemmverbindung weiter eine Klemmhülse aufweist, welche bereits vor der Rohrmontage mit dem Anschlagbund des Anschlussstücks unverlierbar verbunden ist.

Rohre aus polymerem Werkstoff wie beispielsweise PE-X Rohre und Mehrschichtverbundrohre, die beispielsweise eine Innen- und Aussenschicht aus einem polymeren Werkstoff wie PE-X und eine Zwischenschicht aus Aluminium aufweisen werden überwiegend in der Haustechnik, in der Trinkwasserversorgung, für Fussbodenheizungen oder Heizkörperanschlussleitungen eingesetzt.

Klemmverbindungen dieser Art werden meist in der Heizungs- und Sanitärinstallation eingesetzt um Rohre untereinander oder mit Armaturen zu verbinden. Durch eine Klemmverbindung ist eine einfache und schnelle Montage gegeben. Des Weiteren ist eine dauerhafte Abdichtung gewährleistet, was wesentlich bei solchen Verbindungen ist, da bei Wasseraustritt erhebliche Schäden entstehen können.

Aus der DE 42 39 705 C2 ist eine Klemmverbindung bekannt, die aus einer Klemmhülse und einem Fittinggrundkörper besteht. Die Klemmhülse weist eine Innenkontur auf, die jeweils von beiden Hülsenenden ausgehend bis zur Mitte der Klemmhülse hin als konisch sich verengende oder kombiniert konisch / konvex sich verengende Bohrung ausgeführt ist. Diese Innenkontur der Klemmhülse bewirkt, dass die Klemmhülse unabhängig davon wie sie auf das Rohr aufgesteckt wird verwendbar ist.
Nachteilig daran sind die Herstellung der komplexen Innenkontur der Klemmhülse sowie die anschliessende Kontrolle der Kontur.

Die DE 195 14 210 C2 offenbart ebenfalls eine Klemmverbindung für Rohre und Schläuche der gleichen Art. Die Stütz- und Klemmhülse sind derart ausgebildet, dass sie die Dichtheit wie auch die Längskraftschlüssigkeit verbessert, was durch die Rippen an der Stützhülse und die Innenkontur der Klemmhülse erreicht werden soll.

Bei beiden zuvor erwähnten Klemmverbindungen besteht der Nachteil, dass das anzuschiessende Rohr vor dem Verbinden zuerst Aufgeweitet werden muss um es anschliessend über die Stützhülse schieben zu können. Das bedingt eines zusätzlichen Arbeitsschrittes was die Montage aufwendiger macht. Zudem kann das Aufschieben der Klemmhülse bei den zuvor erwähnten Verbindungen vor dem Anbringen des Rohres an der Stützhülse leicht vergessen gehen, weshalb das Rohr dann wieder von der Stützhülse zu entfernen ist und die Klemmhülse nachträglich auf das Rohr aufgesteckt werden muss. Das Rohr kann dann von neuem auf die Stützhülse geschoben werden.

Die DE 20 2004 000 031 U1 offenbart eine Rohrpresskupplung, welche eine Stützhülse, eine Presshülse sowie eine Quetschhülse aufweist. Die einzelnen Teile sind bereits vor der Rohrmontage vormontiert, damit der Montageaufwand auf ein Minimum reduziert werden kann, Zudem ist die Montage selbst, dadurch wesentlich vereinfacht da die Rohrkupplung nicht zuerst noch zusammen gebaut werden muss.

Nachteilig an dieser Kupplung ist jedoch die starke Querschnittverengung im Hinblick auf den Rohrquerschnitt. Zudem weist auch diese Art der Rohrverbindung wie die zuvor erwähnten Verbindungen den Nachteil auf, dass bei starkem Zug auf das Rohr sich die Klemmung/Pressung bzw. Klemmhülse/Presshülse löst.

Aus der US 2002000721 ist eine Klemmverbindung bekannt, wobei die Klemmung durch die Verschiebung der Klemmhülse über das Rohr in entgegengesetzter Richtung zur Einführrichtung des Rohres erfolgt.

Es ist Aufgabe der Erfindung, eine Klemmverbindung vorzuschlagen, welche einfach zu montieren und günstig in der Herstellung ist. Zudem darf sich die Verbindung bei einem Zug auf das montierte Rohr nicht lösen bzw. die Klemmverbindung sollte sich verstärken.

Diese Aufgabe wird erfindungsgemäss dadurch gelöst, dass die Klemmung eines auf die Stützhülse eingeführten Rohres durch die Verschiebung der Klemmhülse über das Rohr in entgegengesetzter Richtung zur Einführrichtung des Rohres erfolgt.

Eine Vorteilhafte Ausgestaltung dieser Klemmverbindung liegt darin, dass der Innendurchmesser des Anschlussstücks dem des einzuführenden Rohres annähernd entspricht bzw. geringfügig kleiner ist als der Innendurchmesser des einzuführenden Rohres. Dadurch können Querschnittsverengungen in der Leitung bzw. beim Anschluss an Armaturen mittels der erfindungsgemässen Klemmverbindung gering gehalten werden, was strömungstechnisch positiv ist.

Das Anbringen der erfindungsgemässen Klemmverbindung an der Rohrleitung bzw. das Einführen des Rohres in die Klemmverbindung benötigt kein vorausgehendes Aufweiten des Rohres durch einen zusätzlichen Arbeitsprozess um es danach auf das Anschlussstück aufzuschieben, wie aus den Klemmverbindungen aus dem Stand der Technik bekannt. Der Einführkonus am Anschlussstück bzw. an der Stützhülse ermöglicht das Einführen des Rohres ohne es zuvor aufzuweiten. Der Einführkonus dient unteranderem dem Aufweiten des Rohres.

Der Anschlagbund des Anschlussstücks dient des Weiteren dazu, das Verschieben der Klemmhülse im montierten Zustand der Klemmverbindung einseitig zu verhindern, bzw. als einseitigen Anschlag für die Klemmhülse. Wodurch eine solche Verbindung auch nicht wieder lösbar ist.

Durch die erfindungsgemässe Klemmverbindung wird zudem erreicht, dass sich die Verbindung bzw. Klemmung verstärkt, im Falle dass Zug auf das Rohr ausgeübt wird. Da das Verschieben der Klemmhülse in Richtung Dichtelement, durch den Zug auf das Rohr, die Klemmung zwischen Dichtelement bzw. Stützhülse und verjüngtem Innendurchmesser der Klemmhülse noch verstärkt.

Die Klemmhülse weist vorzugsweise zwei Bereiche auf. Davon ist einer elastisch und dient der Vormontage, sowie der Montage der Klemmverbindung. Der zweite Bereich ist starr und dient der Klemmung, sowie der Führung des Rohres. Selbstverständlich kann die Klemmhülse noch weitere Bereiche aufweisen.

Durch die Verjüngung des Innendurchmessers wird die Klemmung des Rohres im Zusammenspiel mit dem Dichtelement bzw. der Querschnitterweiterung der Stützhülse erzielt. Die Verjüngung erfolgt im starren Bereich der Klemmhülse in Richtung des elastischen Bereichs. Wobei die Dimension des Innendurchmessers des elastischer Bereichs unabhängig vom Verlauf des Innendurchmessers bzw. der Innenkontur des starren Bereichs ist, vorzugsweise ist der Innendurchmesser im elastischen Bereich grösser als der Aussendurchmesser des eingeführten Rohres und tangiert das Rohr auch nicht im montiertem Zustand der Klemmverbindung.

Der elastische Bereich wird durch mindestens zwei Segmente gebildet, welche vorzugsweise regelmässig über den Umfang verteilt sind. Vorzugsweise weist der elastische Bereich acht bis 16 Segmente auf, die die radiale Elastizität gewährleisten.

Zur axialen Positionierung, sowie Fixierung der Klemmhülse dient eine Rille entlang des Innendurchmessers der Segmente. Dadurch wird die Klemmhülse am Anschlagbund fixiert und positioniert bzw. vormontiert. Die Rille entspricht der Breite des Anschlagbunds. Eine vorteilhafte Ausführung besteht darin, dass die Klemmhülse in der Rille sowie der Anschlagbund eine korrespondierende Phase bzw. Schräge aufweisen, die die Montage bzw. das Hinunterschieben der Klemmhülse vom Anschlagbund vereinfachen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: einen Längschnitt durch eine erfindungsgemässe vormontierte Klemmverbindung bei anfänglicher Rohrmontage,
- Fig. 2: einen Längschnitt durch eine erfindungsgemässe vormontierte Klemmverbindung bei wenig fortgeschrittener Rohrmontage
- Fig. 3: einen Längschnitt durch eine erfindungsgemässe vormontierte Klemmverbindung bei komplett eingeführtem Rohr,
- Fig. 4: einen Längschnitt durch eine erfindungsgemässe vormontierte Klemmverbindung in fertig montiertem Zustand,
- Fig. 5: einen Längschnitt durch eine vormontierte Rohrkupplung, die beidseitig eine erfindungsgemässe Klemmverbindung aufweist,
- Fig. 6: eine Ansicht eines Verteilers, welcher erfindungsgemässe Klemmverbindungen zum anschliessen der Rohre aufweist und
- Fig. 7: einen Längschnitt und eine Ansicht der Klemmhülse der erfindungsgemässe Klemmverbindung.

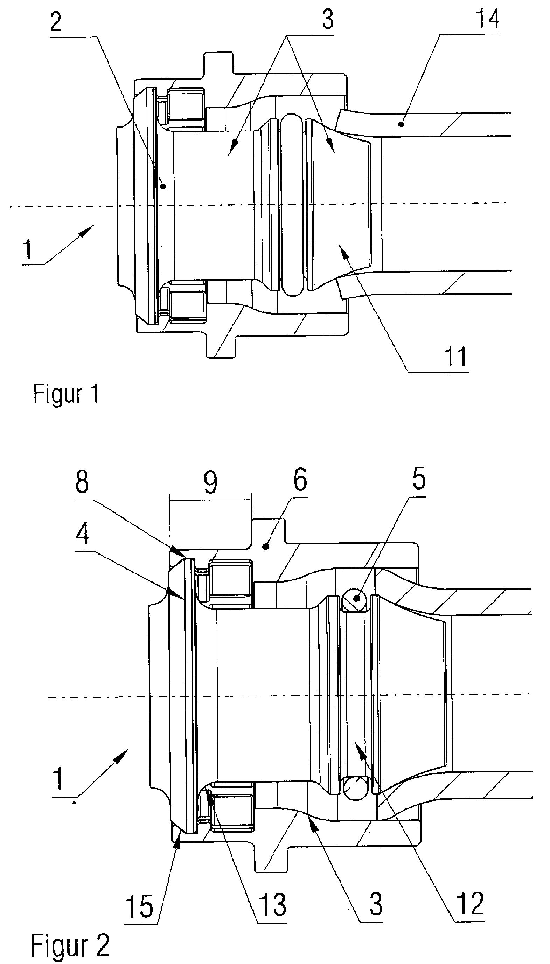

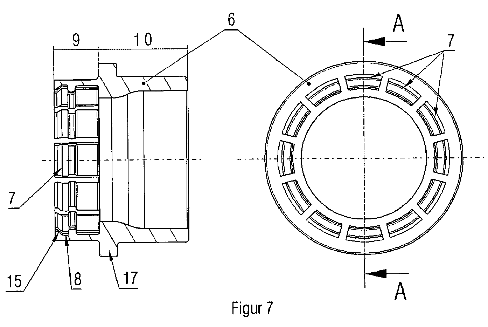

Fig. 1 zeigt eine erfindungsgemässe Klemmverbindung 1, bei welcher das anzuschliessende Rohr 14 bereits leicht auf den konischen Bereich der Stützhülse 3 bzw. den Einführkonus 11 geschoben ist. Das Anschlussstück 2 weist einen Einführkonus 11 auf, der das Einführen des anzuschliessenden Rohres 14 ermöglicht. Durch den Einführkonus 11 kann auf ein vorhergehendes Aufweiten des Rohres 14 verzichtet werden, was einen Arbeitsschritt bei der Montage einspart und die Montage dadurch einfacher und schneller macht. Das Rohr 14, welches aus einem polymeren Werkstoff oder aus einem Verbundwerkstoff hergestellt ist, weitet sich während des Einführens über den Einführkonus 11 auf, wodurch das Einschieben des Anschlussstücks 2 bzw. der Stützhülse 3 ermöglicht wird. Die bereits am Anschlussstück 2 vormontierte Klemmhülse 6 dient unter anderem dem Führen des Rohres 14 während des Einführens, was aus Fig. 2 ersichtlich ist. Beim Erreichen der Klemmhülse 6 wird das Rohr 14 entlang der Innenkontur bzw. des Innendurchmessers der Klemmhülse 6 und entlang der Stützhülse 3 geleitet. Das Dichtelement 5, welches vorzugsweise durch einen O-Ring gebildet wird, dient der optimalen Dichtheit der Klemmverbindung 1. Das Dichtelement 5 ist an der Stützhülse 3 angeordnet und befindet sich in einer dafür vorgesehenen Nut 12, die das Verschieben des Dichtelements 5 verhindert. Das Rohr 14 wird bis zum Radius 13 in die Klemmverbindung 1 geschoben und anschliessend mit der bereits am Anschlussstück 2 vormontierten Klemmhülse 6 befestigt. Die Klemmhülse 6, wie bereits erwähnt, ist am Anschlussstück 2 vormontiert. Das Anschlussstück 2 weist am gegenüberliegenden Ende des Einführkonus 11 der Stützhülse 3 einen Anschlag 4 auf. Er dient unter anderem der Vormontage der Klemmhülse 6. Die Klemmhülse 6 wird am Anschlagbund 4 befestigt. Durch den radial elastischen Bereich 9 der Klemmhülse 6 ist das Vormontieren sowie das Abziehen der Klemmhülse 6 vom Anschlagbund 4 gewährleistet. Durch die Anordnung von Segmenten 7 an der Klemmhülse 6, welche in Fig. 7 ersichtlich sind, wird ein radial elastischer Bereich 9 an der Klemmhülse 6 gebildet. Zur Vormontage lassen sich die Segmente 7 leicht in radiale Richtung aufweiten um den Anschlagbund 4 des Anschlussstücks 2 einzuführen. Durch ihre Elastizität klemmen sie sich anschliessend am Anschlagbund 4 fest, wobei die Innenkontur der Segmente 7 eine Rille 8 aufweisen, welche der Breite des Anschlagbunds 4 entspricht, wodurch die Klemmhülse 6 axial am Anschlagbund 4 fixiert bzw. positioniert ist. Der elastische Bereich 9 besteht aus mindestens zwei Segmenten 7. Vorteilhaft ist es, wenn sowohl die Klemmhülse 6 wie auch der Anschlagbund 4 eine Phase 15 aufweisen, welche das Herunterschieben der Klemmhülse 6 vom Anschlagbund 4 auf das eingeführte Rohr 14 erleichtern.

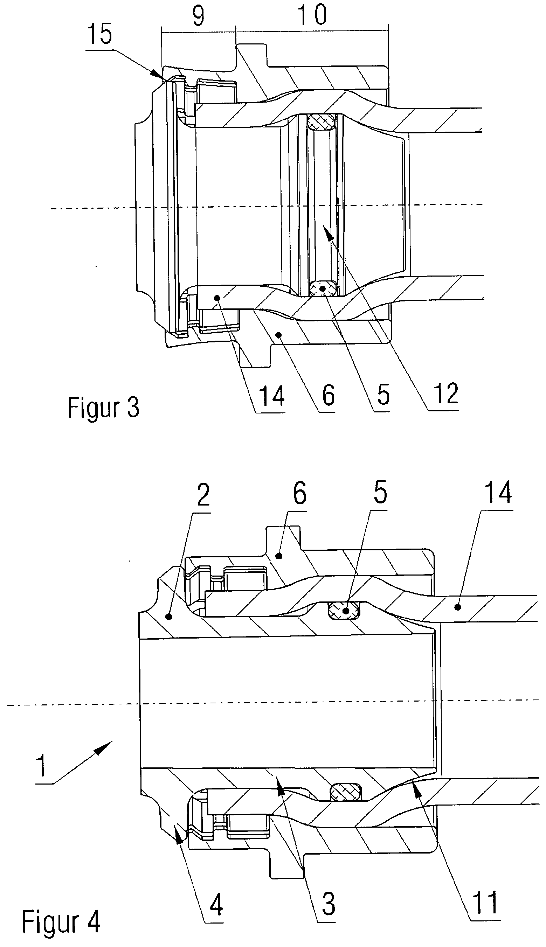

Fig. 3 veranschaulicht diesen Vorgang. Der elastische Bereich 9, der durch die Segmente 7 gebildet wird, verformt sich in einer Weise, dass die Klemmhülse 6 in entgegengesetzter Richtung der Einführung des Rohres 14 geschoben wird, wodurch sich die Phase 15 der Klemmhülse 6 über die Phase 15 des Anschlagbunds 4 und sich dadurch die Klemmhülse 6 auf das eingeführte Rohr 14 schieben lässt. Dadurch, dass die Innenkontur bzw. der Innendurchmesser der Klemmhülse 6 eine Verjüngung im starren Bereich 10 der Klemmhülse 6 aufweist, wobei der Innendurchmesser im starren Bereich 10 in Richtung elastischer Bereich 9 abnehmend ist, verschiebt sich bei der Montage bzw. des Klemmvorgangs der verjüngte Teil der Klemmhülse 6 bzw. die Klemmhülse 6 in Richtung des Dichtelements 5. Durch das Dichtelement 5 und der dafür vorgesehenen Nut 12, weist die Stützhülse 3 an dieser Stelle einen vergrösserten Querschnitt auf, was eine Klemmwirkung beim Verschieben der Klemmhülse 6 in Richtung Dichtelement 5 veranlasst.

In Fig. 4 ist die fertig montierte Klemmverbindung 1 abgebildet. Aus Fig. 4 ist ebenfalls erkennbar, dass durch Zug auf das Rohr 14 die Klemmung verstärkt werden würde, da sich die Klemmhülse 6 ebenfalls in dieselbe Richtung bewegen würde und so am Dichtelement 5 aufgrund des verjüngten Durchmessers der Klemmhülse 6 anstehen würde bzw. das dazwischen befindende Rohr 14 dementsprechend gequetscht werden würde. Der Anschlagbund 4 dient nach der Montage dazu, dass die Klemmhülse 6 auch in die andere Richtung begrenzt ist und nicht demontierbar ist.

Aus dem Stand der Technik ist keine solche Klemmverbindung bekannt, bei welcher das Aufschieben der Klemmhülse entgegen der Einführungsrichtung des Rohres erfolgt, da ein solcher Vorgang bisher als unlogisch empfunden wurde, da dadurch das Rohr bei den bekannten Klemmverbindungen wieder von der Stützhülse hinuntergeschoben werden würde. Zudem ist die Klemmhülse bei herkömmlichen Klemmverbindungen, welche vormontiert sind ebenfalls an der Stützhülse angebracht jedoch nicht auf der Seite des Anschlagbunds sondern auch auf der Seite des einzuführenden Rohres.

Durch den Verlauf der Innenkontur bzw. der Verjüngung des Innendurchmessers der Klemmhülse 6 der vorliegenden Erfindung und die Querschnittserweiterung der Stützhülse 3 durch das Dichtelement 5 ist eine Montage in diese Richtung des Rohres 14 möglich, wobei eine blosse Querschnittserweiterung an der Stützhülse 3 ohne Dichtelement 5 ebenso denkbar ist um dies Klemmwirkung zu erreichen, bei welcher sich die Klemmung bei Zug auf das Rohr verstärkt anstatt löst. Aus Fig. 4 ist zudem ersichtlich, dass der Innendurchmesser des Anschlussstücks 2 annähernd denselben Querschnitt bzw. Durchmesser aufweist wie das einzuführende Rohr. Dadurch kann eine Verengung der Leitung bei Rohrkupplungen oder Armaturanschlüssen mit der erfindungsgemässen Klemmverbindung verringert werden. Zudem wird ein optimaler Übergang durch den Einführkonus 11 gebildet, so dass keine strömungshemmenden Hindernisse durch das eingeführt Anschlussstück 2 entstehen.

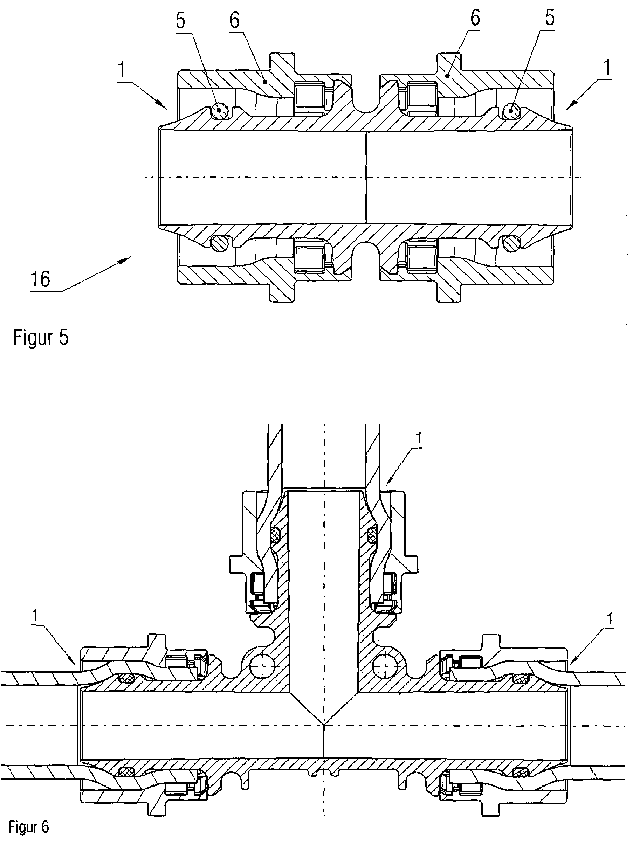

Fig. 5 zeigt eine Rohrkupplung 16, welche sich zum Verbinden von Rohren 14 eignet. Die Kupplung 16 weist beidseitig eine erfindungsgemässe Klemmverbindung 1 auf. Die Rohrkupplung 16 ist im vormontierten Zustand dargestellt. Solche Klemmverbindungen 1 eignen sich bspw. auch für Anschlüsse an Armaturen.

In Fig. 6 ist eine erfindungsgemässe Klemmverbindung 1 dargestellt, welche an einem Verteiler angeordnet ist.

Die Klemmhülse 6 der erfindungsgemässen Klemmverbindung 1, welche in Fig. 7 separat abgebildet ist, weist einen elastischen Bereich 9 auf. Der radial elastische Bereich 9 setzt sich aus Segmenten 7 zusammen die entlang des Umfangs angeordnet sind. Die Anzahl und Grösse der Segmente 7 sind an die Anforderungen der Klemmverbindung 1 sowie an ihre Dimension anzupassen. Zudem weist die Klemmhülse 6 einen starren Bereich 10 auf, der das Klemmen des eingeführten Rohres 14 ermöglicht. Die Innenkontur bzw. der Innendurchmesser im starren Bereich 10 verjüngt sich in Richtung elastischen Bereich 9 wodurch wie zuvor beschrieben, die Klemmwirkung in Abhängigkeit der Stützhülse 3 erzielt wird. Vorzugsweise weist die Klemmhülse 6 am Aussenumfang einen Steg 17 auf, welcher der Montage dient. Durch den Steg 17 an der Klemmhülse 6 kann mit Hilfe eines entsprechenden Montagewerkzeugs die Klemmverbindung 1 montiert werden.

### Bezugszeichenliste

- 1: Klemmverbindung
- 2: Anschlussstück
- 3: Stützhülse
- 4: Anschlagbund
- 5: Dichtelement
- 6: Klemmhülse
- 7: Segment
- 8: Rille
- 9: elastischer Bereich
- 10: starrer Bereich
- 11: Einführkonus
- 12: Nut
- 13: Radius
- 14: Rohr
- 15: Phase
- 16: Rohrkupplung
- 17: Steg

## Patentansprüche

1. Klemmverbindung (1) für Rohre (14) aus polymerem Werkstoff oder aus Verbundwerkstoffen beinhaltend ein Anschlussstück (2), welches eine Stützhülse (3) für das Aufschieben eines anzuschliessenden Rohres (14) aufweist und die an einem Ende mit einem Anschlagbund (4) begrenzt ist, wobei an der Stützhülse (3) ein Dichtelement (5) angeordnet ist, wobei die Klemmverbindung (1) weiter eine Klemmhülse (6) aufweist, welche bereits vor der Rohrmontage mit dem Anschlagbund (4) des Anschlussstücks (2) unverlierbar verbunden ist, **dadurch gekennzeichnet, dass** die Klemmung eines auf die Stützhülse (3) eingeführten Rohres (14) durch die Verschiebung der Klemmhülse (6) auf dem Rohr (14) in entgegengesetzter Richtung zur Einführrichtung des Rohres (14) erfolgt.

2. Klemmverbindung (1) nach Anspruch 1, **dadurch gekennzeichnet, dass** der Innendurchmesser des Anschlussstücks (2) annähern dem Innendurchmesser des einzuführenden Rohres (14) entspricht bzw. geringfügig kleiner ist als der Innendurchmesser des einzuführenden Rohres (14).

3. Klemmverbindung (1) nach einem der Ansprüche 1 oder 2, **dadurch gekennzeichnet, dass** das Anschlussstück (2) einen Einführkonus (11) aufweist.

4. Klemmverbindung (1) nach Anspruch 1, **dadurch gekennzeichnet, dass** der Anschlagbund (4) des Anschlussstücks (2) das Verschieben der Klemmhülse (6) nach der Rohrmontage einseitig verhindert.

5. Klemmverbindung (1) nach einem der Ansprüche 1 bis 4, **dadurch gekennzeichnet, dass** das Herausziehen des eingeführten Rohres (14) die Klemmhülse (6) in Richtung Dichtelement (5) verschiebt und die Klemmung verstärkt.

6. Klemmverbindung (1) nach einem der Ansprüche 1 bis 5, **dadurch gekennzeichnet, dass** die Klemmhülse (6) einen radial elastischen Bereich (9) und einen starren Bereich (10) aufweist

7. Klemmverbindung (1) nach einem der Ansprüche 1 bis 6, **dadurch gekennzeichnet, dass** sich der Innendurchmesser der Klemmhülse (6) im starren Bereich (10) verjüngt.

8. Klemmverbindung (1) nach Anspruch 7, **dadurch gekennzeichnet, dass** sich der Innendurchmesser der Klemmhülse (6) im starren Bereich (10) in Richtung elastischer Bereich (9) verjüngt.

9. Klemmverbindung (1) nach einem der vorangehenden Ansprüche, **dadurch gekennzeichnet, dass** der elastische Bereich (9) der Klemmhülse (6) durch mindestens zwei radial angeordnete Segmente (7) gebildet ist.

10. Klemmverbindung (1) nach Anspruch 9, **dadurch gekennzeichnet, dass** die Segmente (7) eine radial verlaufende Rille (8) aufweisen.

## Claims

1. Clamping joint (1) for pipes (14) made of polymer material or of composite materials, said clamping joint including a connector (2) which has a support sleeve (3) for fitting onto a pipe (14) to be connected and which is defined at one end by way of a stop collar (4), wherein a sealing element (5) is arranged on the support sleeve (3), wherein the clamping joint (1) additionally has a clamping sleeve (6) which is already captively connected to the stop collar (4) of the connector (2) prior to the mounting of the pipe, **characterized in that** the clamping of a pipe (14) inserted on the support sleeve (3) is effected by moving the clamping sleeve (6) on the pipe (14) in the direction opposite to the direction in which the pipe (14) is inserted.

2. Clamping joint (1) according to Claim 1, **characterized in that** the inside diameter of the connector (2) corresponds approximately to the inside diameter of the pipe (14) to be inserted or is slightly smaller than the inside diameter of the pipe (14) to be inserted.

3. Clamping joint (1) according to either of Claims 1 or 2, **characterized in that** the connector (2) has a lead-in cone (11).

4. Clamping joint (1) according to Claim 1, **characterized in that** the stop collar (4) of the connector (2) prevents the clamping sleeve (6) from moving on one side once the pipe has been mounted.

5. Clamping joint (1) according to one of Claims 1 to 4, **characterized in that** pulling out the inserted pipe (14) displaces the clamping sleeve (6) in the direction of the sealing element (5) and strengthens the clamping.

6. Clamping joint (1) according to one of Claims 1 to 5, **characterized in that** the clamping sleeve (6) has a radially elastic region (9) and a rigid region (10).

7. Clamping joint (1) according to one of Claims 1 to 6, **characterized in that** the inside diameter of the clamping sleeve (6) tapers in the rigid region (10).

8. Clamping joint (1) according to Claim 7, **characterized in that** the inside diameter of the clamping sleeve (6) tapers in the rigid region (10) in the direction of the elastic region (9).

9. Clamping joint (1) according to one of the preceding claims, **characterized in that** the elastic region (9) of the clamping sleeve (6) is formed by at least two radially arranged segments (7).

10. Clamping joint (1) according to Claim 9, **characterized in that** the segments (7) have a radially extending channel (8).

## Revendications

1. Connexion de serrage (1) pour tuyaux (14) en matériau polymère ou en matériaux composites contenant une pièce de raccord (2) qui présente une douille de support (3) pour l'enfoncement d'un tube (14) à raccorder et qui est limitée au niveau d'une extrémité par un épaulement de butée (4), un élément d'étanchéité (5) étant disposé au niveau de la douille de support (3), la connexion de serrage (1) présentant en outre une douille de serrage (6) qui est connectée de manière imperdable à l'épaulement de butée (4) de la pièce de raccord (2) déjà avant le montage du tube, **caractérisée en ce que** le serrage d'un tube (14) inséré sur la douille de support (3) s'effectue par l'enfoncement de la douille de serrage (6) sur le tube (14) dans le sens opposé à la direction d'insertion du tube (14).

2. Connexion de serrage (1) selon la revendication 1, **caractérisée en ce que** le diamètre intérieur de la pièce de raccord (2) correspond approximativement au diamètre intérieur du tube à insérer (14) ou est légèrement inférieur au diamètre intérieur du tube à insérer (14).

3. Connexion de serrage (1) selon l'une quelconque des revendications 1 ou 2, **caractérisée en ce que** la pièce de raccord (2) présente un cône d'insertion (11).

4. Connexion de serrage (1) selon la revendication 1, **caractérisée en ce que** l'épaulement de butée (4) de la pièce de raccord (2) empêche d'un côté le déplacement de la douille de serrage (6) après le montage du tube.

5. Connexion de serrage (1) selon l'une quelconque des revendications 1 à 4, **caractérisée en ce que** le retrait du tube inséré (14) déplace la douille de serrage (6) dans la direction de l'élément d'étanchéité (5) et renforce le serrage.

6. Connexion de serrage (1) selon l'une quelconque des revendications 1 à 5, **caractérisée en ce que** la douille de serrage (6) présente une région radialement élastique (9) et une région rigide (10).

7. Connexion de serrage (1) selon l'une quelconque des revendications 1 à 6, **caractérisée en ce que** le diamètre intérieur de la douille de serrage (6) se rétrécit dans la région rigide (10).

8. Connexion de serrage (1) selon la revendication 7, **caractérisée en ce que** le diamètre intérieur de la douille de serrage (6) se rétrécit dans la région rigide (10) dans la direction de la région élastique (9).

9. Connexion de serrage (1) selon l'une quelconque des revendications précédentes, **caractérisée en ce que** la région élastique (9) de la douille de serrage (6) est formée par au moins deux segments disposés radialement (7).

10. Connexion de serrage (1) selon la revendication 9, **caractérisée en ce que** les segments (7) présentent une rainure s'étendant radialement (8).
